# EUROPÄISCHE PATENTSCHRIFT

(11) **EP 3 190 298 B1**
(45) Veröffentlichungstag und Bekanntmachung des Hinweises auf die Patenterteilung: **15.05.2019**
(21) Anmeldenummer: 17150219.8
(22) Anmeldetag: 04.01.2017
(51) Int. Cl.: F16B 5/02

(54) **ANORDNUNG ZUR LÖSBAREN BEFESTIGUNG VON BAUTEILEN**
ASSEMBLY FOR DETACHABLE MOUNTING OF COMPONENTS
SYSTÈME DE FIXATION AMOVIBLE DE COMPOSANTS

(30) Priorität: 06.01.2016 DE 102016200059
(43) Veröffentlichungstag der Anmeldung: 12.07.2017
(73) Patentinhaber: Bombardier Transportation GmbH, 10785 Berlin (DE)
(72) Erfinder: Hartmann, Stefan, 1220 Wien (AT); Resch, Gerhard, 1210 Wien (AT); Von der Grün, Kwon, 1030 Wien (AT)
(74) Vertreter: Köckeritz, Günter

(56) Entgegenhaltungen:
- EP-A1- 1 832 759
- CN-A- 102 745 254

## Beschreibung

Die vorliegende Erfindung betrifft eine Anordnung zur lösbaren Befestigung von Bauteilen mit Mitteln zum Ausgleich von Toleranzen bei der Befestigung eines Bauteils (2) an einem Bauteil (1) nach dem Oberbegriff des Anspruchs 1.

Derartige Anordnungen oder Systeme finden u.a. bei der Befestigung von Bauteilen, insbesondere von Verkleidungen an vorgegebenen Innen- und/oder Außenstrukturen von Fahrzeugen Anwendung. Ein Toleranzausgleich zwischen derartigen Bauteilen erfolgt bislang im Innenbereich häufig durch Kleben oder durch Shimmen im Außenbereich. Aus dem Stand der Technik sind aber auch Befestigungssysteme mit Toleranzausgleich zwischen zwei miteinander im Abstand zueinander verbindbaren Bauteilen bekannt.

In der DE 10151383 A1 wird eine Befestigungseinrichtung mit Toleranzausgleich offenbart, die aus einem Basiselement in Form einer Blindnietmutter, einer Verstellbuchse und einer Befestigungsschraube besteht. Die Blindnietmutter ist an dem Bauteil A festlegbar und weist zwei axial gegeneinander versetzte Innengewinde auf, von denen das eine mit einem Außengewinde der Verstellbuchse eine Gewindepaarung einer ersten Gangrichtung bildet und das andere Gewinde mit dem Gewinde der Befestigungsschraube eine Gewindepaarung einer entgegengesetzten zweiten Gangrichtung bildet. Die Verstellbuchse ist mit über den Umfang verteilten federnden Fingern versehen, die sich beim Einschrauben der Befestigungsschrauben in die Verstellbuchse an das Gewinde der Schraube anlegen und mit dieser eine sogenannte Mitschleppverbindung bilden. Beim Eindrehen der Schraube wird daher die Verstellbuchse mitgedreht und hierdurch aus der Blindnietmutter herausgeschraubt, bis sich ein Flansch der Verstellbuchse zwecks Toleranzausgleichs an das Bauteil A anlegt. Beim Weiterdrehen der Befestigungsschraube und entsprechender Erhöhung des Drehmoments wird die Mitschleppverbindung aufgehoben, sodass dann die beiden Bauteile durch die Befestigungsschraube über die Verstellbuchse und die Blindnietmutter verspannt werden können. Die vorbekannte Befestigungseinrichtung ist vergleichsweise kostenaufwendig, da die Blindnietmutter wegen der beiden Gewinde unterschiedlichen Gangrichtung und insbesondere die Verstellbuchse mit den federnden Fingern komplizierte und in der Herstellung aufwendige Bauteile sind. Auch müssen beide Elemente aus relativ kostspieligem Werkstoff hergestellt werden, um die an sie zu stellenden unterschiedlichen Anforderungen, wie Verbindungsfestigkeit und federnde Eigenschaften der "Mitschleppfinger", zu erfüllen. In der DE 10 2008 055 526 A1 wird eine Vorrichtung zum verspannenden Verbinden zweier in einem Abstand angeordneten Bauteilen angegeben, bei der die Möglichkeit besteht, die beweglichen Teile zu einem späteren Zeitpunkt austauschen zu können. Wesentlich dabei ist, dass die Abstützeinrichtung mit dem Bauteil über einen Bajonettverschluss verbunden ist. Ein Toleranzausgleich kann aber nicht ohne Demontage eines Bauteils erfolgen.

Aus der EP 0533513 A1 ist eine Toleranzausgleichsanordnung bekannt, die aus einer Schraube, einer als Blindnietmutter ausgebildeten Mutter, einer Ausgleichsbuchse und einer Gegenmutter besteht. Die Ausgleichsbuchse ist mit einem Innen- und einem Außengewinde versehen, sodass einerseits die Ausgleichsbuchse in die Mutter und andererseits die Schraube in die Ausgleichsbuchse einschraubbar ist. Zum Toleranzausgleich wird die Ausgleichsbuchse mittels eines Werkzeuges manuell aus der Mutter herausgedreht, bis sie sich an das erste Bauteil anlegt, worauf dann die Ausgleichsbuchse mit der Gegenmutter gesichert wird und damit die beiden Bauteile verspannt werden.

Weiter ist aus der DE 10 2013 212 101 A1 ein Befestigungssystem zum Befestigen eines Bauteils B an einem Bauteil A unter Ausgleich von Toleranzen bekannt. Dieses umfasst eine Schraube, eine Blindnietmutter mit einem Innengewinde und eine Ausgleichsbuchse, wobei ein Klemmkegel vorgesehen ist, der in die Ausgleichsbuchse einsetzbar und mit dieser verliersicher verbindbar ist. Dabei bilden die Ausgleichsbuchse und der Klemmkegel im zusammengesetzten Zustand eine Einheit als Schraubsockel. Beim Ausrichten der Anschraubfläche zu einem definierten Bezug des Bauteils A ergibt sich ein Einstellmaß X zum Rohbau (Toleranzausgleich). Dieses Maß kann dann, bedingt durch die mögliche Einschraubtiefe in der Blindnietmutter in einem bestimmten Bereich ausgerichtet werden. Dazu ähnliche Systeme oder Anordnungen werden auch in den Druckschriften DE 10 2011 056 465 A1 und WO2003/085274 A1 offenbart.

In der EP 1 832 759 A1 wird eine Fahrzeugbauteil-Montageanordnung offenbart, welche eine Toleranzkompensations-Montagevorrichtung umfasst, die ein Fahrzeugbauteil fest mit der Fahrzeugkarosserie verbindet. Die Toleranzkompensations-Montagevorrichtung umfasst dafür eine Befestigungsschraube, ein äußeres Element, das mit dem Fahrzeugbauteil fest verbunden ist, sowie ein röhrenförmiges Element mit einem Innengewinde, welches mit der Befestigungsschraube im Gewindeeingriff steht. Der Toleranzausgleich erfolgt dabei durch Drehung der Befestigungsschraube, worauf die Anordnung am Bauteil fixiert wird.

Der vorliegenden Erfindung liegt die Aufgabe zugrunde, eine Anordnung zur lösbaren Befestigung eines Bauteils an einem anderen Bauteil vorzustellen, welche mit Mitteln zum Ausgleich von fertigungs- und/oder montagebedingter Toleranzen zwischen dem ersten und dem zweiten Bauteil ausgestaltet ist, und deren Montage leicht ist.

Erfindungsgemäß wird diese Aufgabe durch die Merkmale des Anspruchs 1 gelöst. Vorteilhafte Weiterbildungen der Erfindung sind in den zugehörigen Ansprüchen enthalten.

Erfindungsgemäß ist vorgesehen, dass als Mittel zum Ausgleich von Toleranzen zwischen dem ersten Bauteil und dem zweiten Bauteil ein Drehteil vorgesehen ist, welches eine mit dem zweiten Bauteil fest verbindbare Hülse und eine in der Hülse gelagerte und darin verdrehbare Scheibe aufweist. Dabei ist die Scheibe über eine Befestigungsschraube mit einer Blindnietmutter und damit mit dem ersten Bauteil verbindbar, wobei das zweite Bauteil abnehmbar ist. Die genannte Scheibe weist dafür ein Außengewinde auf und auf der zum zweiten Bauteil gerichteten Seite der Scheibe sind Eingreifstellen für ein Stellwerkzeug zum Toleranzausgleich vorgesehen. Durch Anziehen der Scheibe in der Hülse über die Eingriffsstellen mittels eines Werkzeuges erfolgt ein Toleranzausgleich zwischen dem ersten und dem zweiten Bauteil.

Erfindungsgemäß ist vorgesehen, dass die Hülse des Drehteils ein Innengewinde aufweist sowie einen zum zweiten Bauteil gerichteten Rand, der als Klebefläche zur Verbindung mit dem zweiten Bauteil vorgesehen ist. In die Hülse des Drehteils kann auf der Seite des zweiten Bauteils, beispielweise einer Außenverkleidung eines Fahrzeuges eine Abdeckkappe eingeschraubt werden.

Vorteilhaft wird durch die Erfindung erreicht, dass alle Freiheitsgrade eingestellt werden können, ohne Demontage der Außenverkleidung. Mit Hilfe der Abdeckkappe wird die Anordnung vorteilhaft verdeckt.

Anhand der Zeichnungen werden Ausführungsbeispiele der Erfindung näher erläutert.

Es zeigen:
- Fig. 1: die Teile des Befestigungssystems in Explosionsansicht und in einer perspektivischen Darstellung,
- Fig. 2: die Anordnung in Funktion in einer Schnittdarstellung,
- Fig. 3: Schnittdarstellung der Anordnung mit montiertem Bauteil 2 an einem Bauteil 1 mit Toleranzausgleich,
- Fig. 4: Darstellung des Toleranzausgleichs mittels eines Werkzeuges.

Die Montage der Anordnung zum Befestigen eines Bauteils 2 an einem Bauteil 1 wird nachfolgend näher beschrieben.

Die Anordnung dient insbesondere der lösbaren Befestigung einer Verkleidung an einer Struktur, insbesondere einer Fahrzeugstruktur. Die Anordnung weist weiterhin Mittel zum Ausgleich von fertigungs- und/oder montagebedingter Toleranzen zwischen dem ersten und einem zweiten Bauteil auf. Die Anordnung umfasst dafür eine Blindnietmutter 5 mit einem Innengewinde sowie eine Befestigungsschraube 4. Die Blindnietmutter 5 wird im Bauteil 1, d.h. der Fahrzeugstruktur positioniert. Als Mittel zum Ausgleich von Toleranzen zwischen dem ersten Bauteil 1, der Fahrzeugstruktur und dem zweiten Bauteil 2, der Außenverkleidung ist ein Drehteil 3 vorgesehen, welches eine mit dem Bauteil 2 fest verbundene Hülse 3.1 und eine in der Hülse 3.1 gelagerte und darin verdrehbare Scheibe 3.2 aufweist.

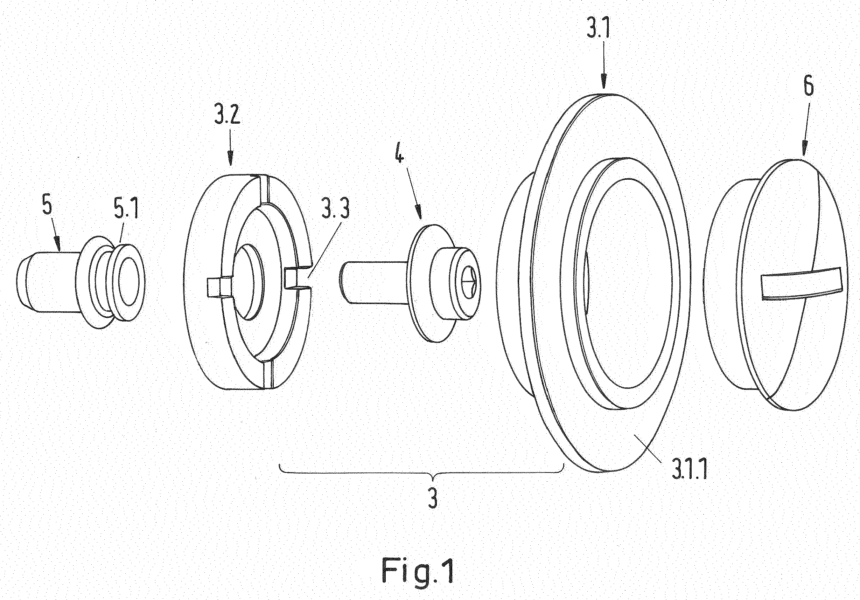

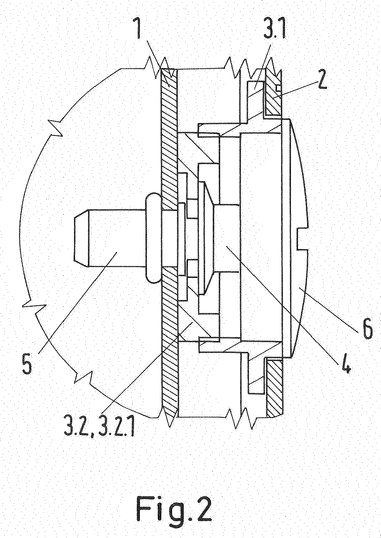

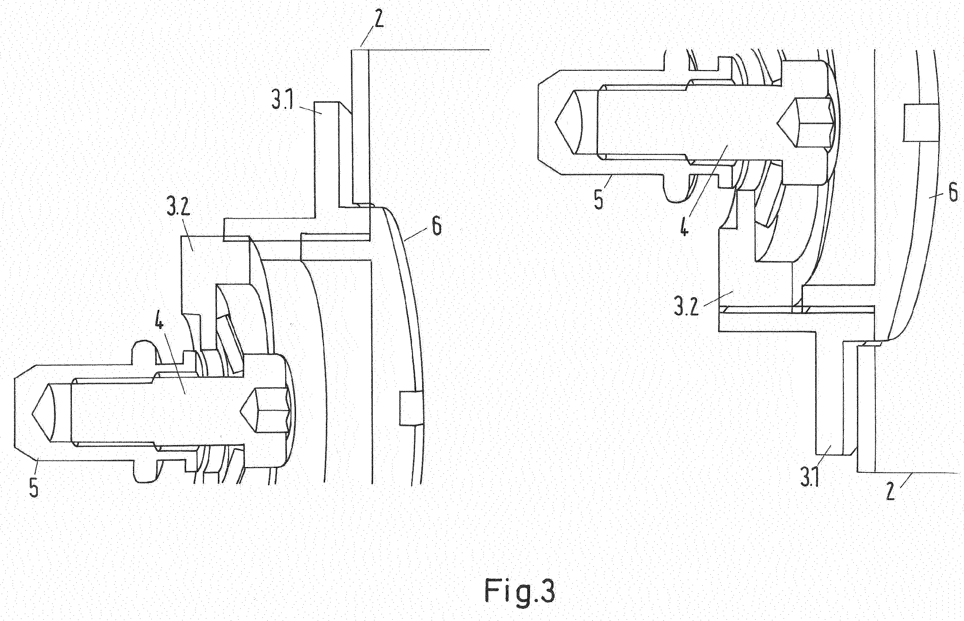

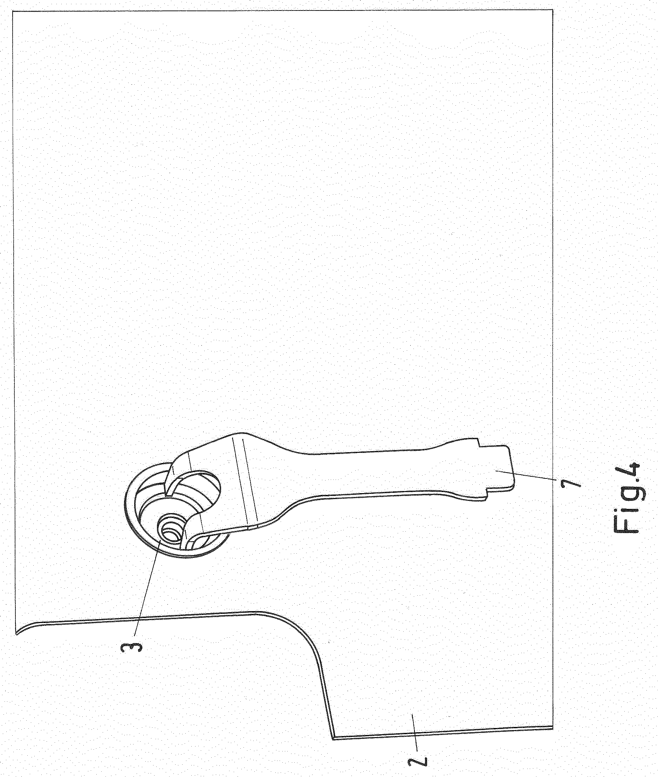

Die Hülse 3.1 wird zunächst im Bereich des Bunds 3.1.1 mit dem Bauteil 2 (hier Außenverkleidung) fest verklebt oder in anderer Weise (kraft-, form- oder stoffschlüssig) mit dem Bauteil 2 verbunden. Dann wird die Scheibe 3.2 in die Hülse 3.1 eingedreht. Anschließend erfolgt die Positionierung des zu befestigenden Bauteils 2 (z.B. Verkleidungsplatte) über den Befestigungspunkten (Position der Blindnietmutter 5) im Rohbau der Struktur bzw. des Bauteils 1. Die Blindnietmutter 5 weist dafür einen umlaufenden Bund 5.1 auf und die Scheibe 3.2 eine entsprechende Freistellung 3.2.1 für den Bund der Blindnietmutter 5. Das Bauteil 2 wird mit dem Drehteil 3 auf die Blindnietmutter aufgesetzt. Mittels eines Werkzeuges 7 (Fig. 4) erfolgt der Toleranzausgleich. Das Werkzeug 7 greift dabei in die Eingreifstellen 3.3 der Scheibe 3.2 ein und zieht zum Ausgleich von fertigungs- und/oder montagebedingter Toleranzen die Scheibe 3.2 in der Hülse 3.1 an. Anschließend wird das Drehteil 3 mittels der Befestigungsschraube 4 in der Blindnietmutter 5 und damit im Bauteil 1 (der Fahrzeugstruktur) fixiert. Die o.g. Einzelteile der Anordnung sind in der Fig. 1 in einer Explosionsansicht dargestellt. In der Fig. 2 wird die Anordnung in einer Schnittdarstellung im montierten Zustand gezeigt, d.h. die Außenverkleidung (Bauteil 2) ist mit Hilfe der Anordnung an der Struktur (Bauteil 1) befestigt. Das Wirkprinzip des Systems wird in der Fig. 3 verdeutlicht. Die Hülse 3.1 des Drehteils 3 kann auf der Seite des Bauteils 2 mit einer Abdeckkappe 6 versehen werden, die aufsteckbar oder einschraubbar ist.

Bevorzugt wird die Abdeckkappe dabei mit der Rückseite des Spezialwerkzeugs in das Innengewinde eingeschraubt und somit die Schraube 4 verdeckt. Dies ermöglicht ein optisch schöneres Außendesign.

Das Werkzeug 7 weist dazu, neben den Mitteln zum Eingreifen in die Eingreifstelle 3.3 der Scheibe 3.2, an seiner Rückseite eine Schraubenzieher ähnliche Gestaltung auf, mit welcher die Abdeckkappe 6 eingeschraubt werden kann.

## Patentansprüche

1. Anordnung zur lösbaren Befestigung von Bauteilen, welche Mittel zum Ausgleich von Toleranzen zwischen einem ersten und einem zweiten Bauteil (1, 2) aufweist und weiter eine Blindnietmutter (5) mit einem Innengewinde sowie eine Befestigungsschraube (4) umfasst, wobei als Mittel zum Ausgleich von Toleranzen zwischen dem ersten Bauteil (1) und dem zweiten Bauteil (2) ein Drehteil (3) vorgesehen ist, welches eine mit dem Bauteil (2) fest verbindbare Hülse (3.1) und eine in der Hülse (3.1) gelagerte und darin verdrehbare Scheibe (3.2) aufweist, wobei die Scheibe (3.2) über die Befestigungsschraube (4) mit der Blindnietmutter (5) und damit mit dem Bauteil (1) verbindbar ist und die Scheibe (3.2) ein Außengewinde aufweist und auf der zum Bauteil (2) gerichteten Seite der Scheibe (3.2) Eingreifstellen (3.3) für ein Stellwerkzeug (7) zum Toleranzausgleich vorgesehen sind, wobei die Hülse des Drehteils mit einem Innengewinde versehen ist und einen Bund aufweist, der zum Bauteil gerichtet sein kann und der mit dem Bauteil verklebbar ist, **dadurch gekennzeichnet, dass** die Scheibe (3.2) mit einer Freistellung (3.2.1) versehen ist und die Blindnietmutter (5) einen umlaufenden Bund (5.1) aufweist, wobei die Scheibe (3.2) mit der Freistellung (3.2.1) auf den Bund (5.1) aufsetzbar ist.

2. Anordnung nach den Anspruch 1, **dadurch gekennzeichnet, dass** die Hülse (3.1) des Drehteils (3) auf der Seite des Bauteils (2) mit einer Abdeckkappe (6) versehen ist.

3. Anordnung nach den Ansprüchen 1 und 2 , **dadurch gekennzeichnet, dass** das Stellwerkzeug (7) Mittel zum Eingreifen in die Eingreifstellen (3.3) der Scheibe (3.2) und zum Einschrauben der Abdeckkappe (6) aufweist.

## Claims

1. An assembly for detachable mounting of components that has means for compensating tolerances between a first and a second component (1, 2) and further comprises a blind rivet nut (5) having a female thread and a fixing screw (4), wherein provided as means for compensating tolerances between the first component (1) and the second component (2) is a rotational part (3) that has a sleeve (3.1), which may be securely connected to the component (2), and a disk (3.2) borne in the sleeve (3.1) and rotatable therein, wherein the disk (3.2) may be connected via the fixing screw (4) to the blind rivet nut (5) and thus to the component (1) and the disk (3.2) has a male thread and provided on the side of the disk (3.2) facing the component (2) are access elements (3.3) for an adjusting tool (7) for compensating tolerances, **characterized in that** the disk (3.2) is provided with a free position (3.2.1) and the blind rivet nut (5) has a circumferential band (5.1) wherein the free position (3.2.1) of the disk (3.2) may be placed onto the band (5.1), wherein the sleeve (3.1) of the rotational part (3) is provided with a female thread and has a band (3.1.1) that faces the component (2) and that may be glued to the component (2).

2. The assembly according to claim 1, **characterized in that** the sleeve (3.1) of the rotational part (3) is provided with a cap (6) on the side of the component (2).

3. The assembly according to claims 1 and 2, **characterized in that** the adjusting tool (7) has means for engaging in the access elements (3.3) of the disk (3.2) and for screwing on the cap (6).

## Revendications

1. Système de fixation amovible de composants, lequel présente des moyens pour compenser des tolérances entre un premier et un deuxième composant (1, 2) et comprend en outre un écrou borgne (5) avec un filetage intérieur ainsi qu'une vis de fixation (4), dans lequel il est prévu en tant que moyen de compensation de tolérances entre le premier composant (1) et le deuxième composant (2), une partie rotative (3), laquelle présente une douille (3.1) pouvant être reliée solidement au composant (2) et un disque (3.2) logé dans la douille (3.1) et pouvant tourner à l'intérieur, dans lequel le disque (3.2) peut être relié par le biais de la vis de fixation (4) à l'écrou borgne (5) et ainsi au composant (1) et le disque (3.2) présente un filetage extérieur et des points de mise en prise (3.3) pour un outil de réglage (7) pour la compensation de tolérance sont prévus sur le côté du disque (3.2) tourné vers le composant (2), dans lequel la douille de la partie rotative est dotée d'un filetage intérieur et présente une collerette, qui peut être dirigée vers le composant et qui peut être collée au le composant, **caractérisé en ce que** le disque (3.2) est doté d'une position libre (3.2.1) et l'écrou borgne (5) présente une collerette périphérique (5.1), dans lequel le disque (3.2) peut être posé avec la position libre (3.2.1) sur la collerette (5.1).

2. Système selon la revendication 1, **caractérisé en ce que** la douille (3.1) de la partie rotative (3) est dotée d'un capot de protection (6) sur le côté du composant (2).

3. Système selon les revendications 1 et 2, **caractérisé en ce que** l'outil de réglage (7) présente des moyens de mise en prise, dans les points de mise en prise (3.3) du disque (3.2), et de vissage du capot de protection (6).
